# EUROPEAN PATENT SPECIFICATION

(11) **EP 2 694 938 B1**
(45) Date of publication and mention of the grant of the patent: **06.11.2019**
(21) Application number: 12718892.8
(22) Date of filing: 28.03.2012
(51) Int. Cl.: F17D 5/06, G01M 3/28, G01M 3/32, F17D 5/02, G01M 3/24

(54) **A METHOD AND MEANS FOR DETECTING LEAKAGES IN PIPE INSTALLATIONS**
VERFAHREN UND MITTEL ZUM ERKENNUNG VON LECKAGEN IN ROHRINSTALLATIONEN
PROCÉDÉ ET MOYEN POUR DÉTECTER LES FUITES DANS LES INSTALLATIONS DE CANALISATIONS

(30) Priority: 07.04.2011 DK 201100268; 15.09.2011 DK 201100699
(43) Date of publication of application: 12.02.2014
(73) Proprietor: Dantaet A/S, 5250 Odense SV (DK)
(72) Inventor: GARNÆS, Svend, DK-5250 Odense 3V (DK)
(74) Representative: Larsen, Hans Ole
(86) International application number: PCT/DK2012/000029
(87) International publication number: WO 2012/136209

(56) References cited:
- WO-A1-2004/113863
- GB-A- 2 289 760
- JP-A- 1 098 932
- JP-A- 55 066 730
- US-A- 5 272 646

## Description

### The prior art

The invention relates to a method of detecting leakages in pipe installations with supply and return pipes when executing a leakage control system, said leakage control system comprising partly at least one shut-off valve with an associated electric actuator and a flow meter arranged in the supply pipe of the pipe installation, partly at least one shut-off valve with an associated actuator and a flow meter arranged in the return pipe of the pipe installation, said shut-off valves, actuators and flow meters being connected with a control box, said control box being adapted to execute the method when running through a periodic course comprising a measurement and activity period followed by an inactive period.

Moreover, the invention relates to a leakage control system for carrying out the method.

It is generally known to equip leakage control systems for pipe installations with flow meters. Such flow meters are frequently mechanical and respond in the manner that when such a flow meter is passed by an air bubble, the drive shaft is kept in rotation by the passing air. Thus, the meter indicates continued flow, although this is not true. Known examples of leakage control systems with mechanical meters are described in the documents US 4,883,087 and WO 2004/113863.

The use of static flow meters according to the ultrasound principle is likewise known in connection with leakage control systems. The results achieved at the use in leakage control systems, however, are not totally satisfactory. The problem lies in the manner in which an ultrasound meter responds to the presence of air in the pipes. When an air bubble passes an ultrasound transducer, which is exposed thereby, it will indicate "no flow" - that is standstill.

This behaviour is highly undesirable, as it will cause false alarm messages in leakage control systems, which are based on the monitoring of volume flow difference or mass flow difference in pipe installations.

WO2004113863 discloses a leak control system in two-stringed pipe in-stallations and a method of executing a leak control system comprising one stop valve with an associated flow meter arranged in the supply pipe of the pipe installation, and one stop valve with an associated flow meter arranged in the return pipe of the pipe installation. The stop valves as well as associated flow meters are connected to a control box. The box comprises one valve monitor connected to each stop valve to control/record the possible state of the individual stop valve: open or closed, as well as an executer which, in combination with the control logics of the control box and the operating conditions of the pipe installation, controls/monitors the valve monitors during a given sequence of actions. The leak control system is capable of performing a number of measurements and data collections to evaluate the functionality of the stop valves and/or the elasticity and/or the tightness of the pipe installation. This provides the possibility of distinguishing between leakage proper and defects in the stop valves as well as the need for venting in the pipe installation and thereby a measurement area which begins at a low level, such that the comfort in e.g. a district heating system may be maintained.

### The object of the invention

The object of the invention is to provide a method and means for a leakage control system, which are independent of the selected type of flow meters, and which also tolerate the behaviour of the ultrasound meters, without the system giving false alarms, and without diminishing the sensitivity of the system.

### Summary of the invention

This object is achieved by a method and means as stated in the introductory portion of claim 1, wherein the control box executes a measurement and activity period comprising
- collection of volume or mass flow data from the supply pipe and the return pipe with the associated ultrasonic flow meters,
- recording of the presence of air in the supply pipe and the return pipe,
- processing of the collected volume or mass flow data in a computing unit,
- recording of operational disturbances on the basis of the processed flow data, and
- decision on intervention on the basis of recorded operational disturbances, if the number of operational disturbances exceeds a dynamic error criterion, said error criterion being corrected currently in accordance with the presence of air, if any, in the installation.

It is hereby possible to perform monitoring of flow difference by collecting and processing the collected volume or mass flow data with very short intervals, checking whether there is air in the pipes, recording operational disturbances, if any, and subsequently deciding whether there is a leak, which has to be handled.

When the collection of volume or mass flow data from the supply pipe and the return pipe takes place during the entire measurement period, which is divided into a number of short time intervals, and when the measurement result for the period consists of a measurement result from each of the time intervals, also the mode of operation of ultrasonic meters is allowed for in connection with the transmission and reception of sound pulses, and, consequently, the measurement result consists of a plurality of discrete values.

When the flow values in each pipe are compared with each other for each time interval, it is ensured that it may be checked whether air is present in the pipes, since a flow value of zero in one pipe and a flow value greater than the cut-off valve of the flow meter in the other pipe is a clear indication of the presence of air in the pipes, causing an air indicator to be set.

When, as stated in claim 2, the number of air indications in each measurement and activity period is summed up successively, it is ensured that corrections on decision criteria may be made. This allows an air pocket to pass over one or more measurement periods, without this giving rise to the generation of an alarm.

When, as stated in claim 3, an average volume or mass flow value for the measurement period is calculated for the supply pipe as well as the return pipe on the basis of the measurement results collected in the short time intervals, and when a volume or mass flow difference for the period is calculated on the basis of the average volume or mass flow values, it is ensured that small fluctuations in the measured volume or mass flow are smoothed out, so that the subsequent calculation of the volume or mass flow difference may be performed with the greatest possible accuracy.

When, as stated in claim 4, the calculated volume or mass flow difference is compared with a selected threshold value, and if the absolute value of the volume or mass flow difference exceeds the selected threshold value, the excess is recorded as an operational disturbance. It is ensured hereby that the number of operational disturbances may be summed up for a selected number of successive measurement periods.

When, as stated in claim 5, the number of recorded operational disturbances from successive measurement periods is compared with the value of a selected error criterion, and if the number of operational disturbances exceeds the value of the selected error criterion, an alarm message is given, and the pipes are shut-off. This increases the time during which a leak error may be present before an alarm is given, and it is ensured that an operational disturbance of a shot duration, such as e.g. the passage of an air bubble, does not cause an alarm, which is possible without simultaneously reducing the sensitivity of the alarm threshold.

When, as stated in claim 6, the error criterion comprises adjustment of the adjustable value in accordance with the number of air indications summed up, a dynamic correction of the error criterion is achieved, which makes it possible to prevent unnecessary alarm and shutting-off of the pipes.

When, as stated in claim 7, the fixed value of the error criterion is determined on the basis of a selected acceptable number of measurement periods with operational disturbances, it is basically ensured that the sensitivity of the system may be set to a preselected value.

When, as stated in claim 8, the threshold value consists of a selected fixed value proportional to the capacity of the ultrasound flow meters and a dynamic value proportional to the average flow of the ultrasound flow meters, a dynamic correction of the threshold value, which follows the flow, is achieved, so that the number of recorded operational disturbances is restricted as much as possible.

When, as stated in claim 9, newly arrived flow data overwrite the oldest flow data in a measurement and activity period, as long as no operational disturbance is recorded, it is ensured that all calculations and decisions are made on the measurements most recently arrived.

When, as stated in claim 10, all previous flow data in a measurement and activity period are deleted, if an operational disturbance is recorded, it is ensured that operations may be performed on the basis of fresh measurement data in subsequent measurement periods.

When, as stated in claim 11, an error message is given, if the duration of a recorded continuous air indication exceeds a preselected period of time, it is possible to take measures against errors on an ultrasound flow meter.

Flow data are determined for the supply pipe and/or the return pipe with flow meters based on ultrasound.

Wherein when, as stated in claim 12, the flow value is measured as mass flow the method further comprises:
- collection of temperature data for the flow in the supply and in the return pipe by means of the temperature sensors, and
- calculation of mass flow on the basis of collected volume flow data and temperature data in an energy computing unit.

When the leakage control system is configured as stated in claims 13-16, an expedient performance of the method of claims 1-12 is achieved.

### The drawing

Exemplary embodiments of the invention will be explained more fully below with reference to the drawing, in which
- fig. 1: is a diagram with the important components in a leakage control system based on the monitoring of volume flow difference, and
- fig. 2: is a diagram with the important components in a leakage control system based on the monitoring of mass flow difference.

### Detailed description of the invention

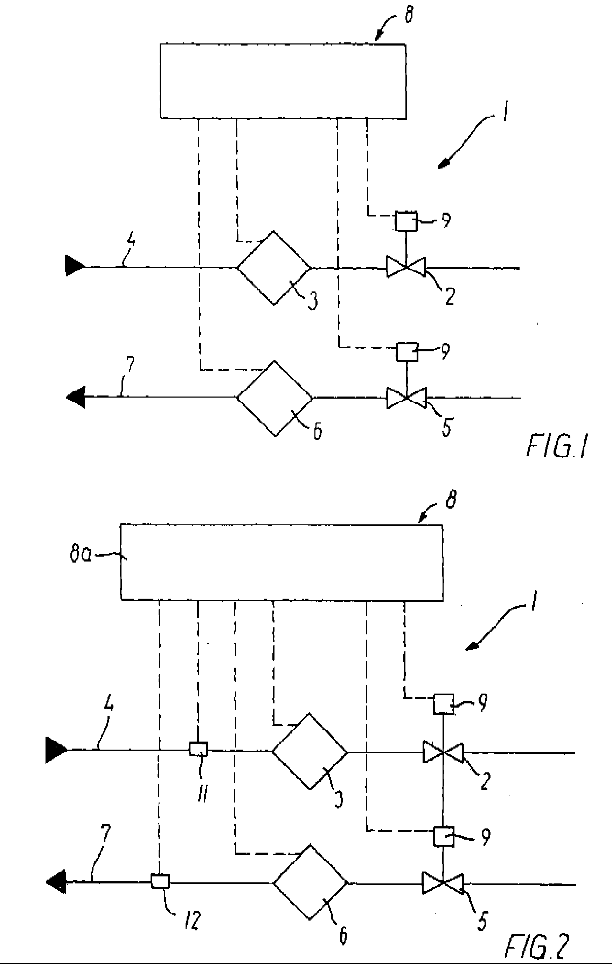

Fig. 1 shows the important components in a leakage control system 1 based on the monitoring of volume flow difference in a pipe installation with a supply pipe 4 and a return pipe 7. The supply pipe 4 is equipped with a shut-off valve 2 with an associated actuator 9 and a flow meter 3, and the return pipe 7 is likewise equipped with a shut-off valve 5 with an associated actuator 9 and a flow meter 6. The flow meter 3 is arranged in series with the shut-off valve 2 on the supply pipe 4, and, in the same manner, the flow meter 6 is arranged in series with the shut-off valve 5 of the return pipe 7. The actuators and the flow meters are connected electrically to the control box 8.

The control box 8 is provided with a scheduler which passes the leakage system through a periodic course consisting of a measurement and activity period followed by an inactive period. Moreover, the control box is provided with a computing unit which processes the collected measurement results and corrects a selected threshold value and a selected error criterion, as well as a control system which, when comparing the processed measurement results with the threshold value and with the error criterion, makes a decision on giving an alarm message and shutting-off the supply and return pipes.

The function of the flow meters is to measure a flow through the pipes 4 and 7, and preferably they operate according to measurement principles based on ultrasound and Doppler effect.

The shut-off valves 2 and 5 are motor valves, which are activated by the actuators 9, which receive control signals from the control box 8.

Fig. 2 shows the important components in a leakage control system 1 based on the monitoring of mass flow difference in a pipe installation. A temperature sensor 11 is inserted in series with the flow meter 3 in the supply pipe 4, and, likewise, a temperature sensor 12 is inserted in series with the flow meter 6 in the return pipe 7. Moreover, the control box 8 is expanded with an energy computing unit 8a, and the temperature sensors and the flow meters are connected electrically to this computing unit. The energy computing unit supplies mass flow data to the control box.

When using ultrasound-based flow meters, where the operating principle of the ultrasound meters is to transmit a sound pulse through the medium and then to receive a reflected pulse signal, thereby allowing the medium flow to be determined via the Doppler effect, then what will happen is that the ultrasound meter indicates "no flow", i.e. standstill, when a reflector is exposed, because an air bubble passes by.

As mentioned before, such a behaviour is inexpedient in a leakage control system which bases the monitoring on volume flow difference or on mass flow difference, because the air bubbles will give rise to false alarms. Therefore, it will be expedient to arrange the leakage control system to accept the passage of a certain amount of air bubbles, without simultaneously sacrificing the sensitivity of the system.

The flow measurement is performed in a predefined measurement period, which consists of a large number of short time intervals, and the flow result is formed by the discrete measurement values generated in the short time intervals. The length of the time intervals is preferably adapted to the operating principle of the ultrasound meters.

The indications of the flow meters are suppressed at very low flow values in order to avoid incorrect measurements. The flow limit at which this suppression begins, is called the cut-off value of the meter.

The examination of whether there is air in the pipes, takes place in each time interval in the measurement period. The examination is performed by comparing the flow values in the two flow meters. If both flow meters show flow values above the cut-off value, there is no air in the pipes in the time interval. If, on the other hand, one flow meter shows zero, and the other flow meter shows a value greater than the cut-off value, this indicates that there is air in one flow meter, and an air indicator is set.

Thus, several air indications may occur in a measurement period. However, an upper limit is incorporated as to how long a continuous air indication may occur, and when this limit is exceeded, a system error message is given, because the flow meter has an error, and the flow measurement is therefore basically unreliable.

As part of the monitoring of volume flow difference (see fig. 1), the measurement results from all the time intervals in the measurement period are collected. The results are processed in the computing unit of the control box so as to provide an average value for the volume flow in the supply pipe as well as in the return pipe. The volume flow difference is then calculated on the basis of the two values.

The calculated volume flow difference is then compared with a selected threshold value A, and if the absolute value of the volume flow difference is greater than the threshold value, the excess is recorded as an operational disturbance.

The threshold value A consists of an adjustable, but selected fixed value whose size is proportional to the capacity of the flow meter, as well as a dynamic value whose size is proportional to the average flow of the flow meters. Thus, the threshold value is changed in step with the flow amount.

The number of recorded operational disturbances from a number of successive measurement periods is compared with the value of a selected error criterion B, and if the number of operational disturbances exceeds the value of the selected error criterion, an alarm message is given, and the pipes are shut-off.

The error criterion B consists of a selected fixed value whose size is determined on the basis of a selected acceptable number of measurement periods with operational disturbances, as well as an adjustable value whose size is corrected dynamically by automatic adjustment of the value in accordance with the number of air indications summed up.

When the volume flow difference monitoring is arranged as stated above, the time during which a leakage error may be present, is extended, and the alarm is postponed. It is ensured hereby that an operational disturbance of short duration, such as e.g. the passage of an air bubble, does not cause an alarm. This extension of the time is directly controllable via the selected fixed value for the error criterion, as the threshold value has no influence thereon. At the same time, the sensitivity of the system is intact.

All newly arrived flow data overwrite the oldest flow data in a measurement period, as long as operational disturbances are not recorded. It is ensured hereby that all calculations and decisions are made on the basis of the most recently arrived measurements. If an operational disturbance is recorded, all measurement data for the period are deleted, and a new collection of data in the subsequent measurement period is begun.

For monitoring mass flow difference (see fig. 2), the control box 8 is expanded with an energy computing unit 8a. The collected flow and temperature measurements are passed to the energy computing unit, in which they are processed so that mass flow data may be obtained from the computing unit for further processing in the computing unit and the control system of the control box.

Leakage monitoring based on mass flow difference is more accurate than monitoring based on volume flow difference, as supply pipe and return pipe temperatures for the medium are measured and used for thermal coefficient and mass flow calculation. In accordance with this, the static and dynamic sensitivities of the mass flow difference monitoring are higher than the corresponding values for the volume flow difference monitoring. On the other hand, the measurement period and thereby the response time are considerably longer, typically 24 hours. This higher sensitivity, however, may be achieved solely by ignoring measurement data from periods with air indication or temperature sensor errors.

Monitoring based on mass flow difference is suitable for the detection of very small leakages, such as e.g. seeping. Moreover, it is suitable for use in installations where routine operational disturbances are not allowed.

## Claims

1. A method of detecting leakages in pipe installations with one supply (4) and one return (7) pipe by means of a leakage control system (1), which comprises one shut-off valve (2) with an associated actuator (9) and an ultrasound flow meter (3) arranged in the supply pipe (4) of the pipe installation, and a shut-off valve (5) with an associated actuator (9) and an ultrasound flow meter (6) arranged in the return pipe (7) of the pipe installation, said shut-off valves (2, 5), actuators (9) and ultrasound flow meters (3, 6) being connected with a control box (8), said control box being adapted to execute the method when running through a periodic course comprising a measurement and activity period followed by an inactive period, wherein the measurement and activity period comprises:
- collection of volume or mass flow data from the supply pipe (4) and the return pipe (7) with the associated ultrasound flow meters (3, 6),
- recording of the presence of air in the supply pipe (4) and the return pipe (7),
- processing of the collected volume or mass flow data in a computing unit,
- recording of operational disturbances on the basis of the processed volume or mass flow data, and
- decision on intervention on the basis of the number of recorded operational disturbances, if the number of operational disturbances exceeds a dynamic error criterion (B), said error criterion (B) being corrected currently in accordance with the presence of air, if any, in the installation;
**characterized in that** the measurement and activity period is divided into a number of short time intervals, and wherein the presence of air in the supply pipe (4) and the return pipe (7) is checked in each time interval in the entire measurement and activity period by comparing the volume or mass flow values in each pipe with each other, and if a volume or mass flow value is zero in one pipe, and a volume or mass flow value greater than the cut-off value of the ultrasound flow meter is measured in the other pipe, this is recorded as an indication of the presence of air.

2. A method according to claim 1-, **characterized in that** the number of air indications in each measurement and activity period is summed up successively.

3. A method according to claims 1-2, **characterized in that** an average volume or mass flow value for the measurement and activity period is calculated for the supply pipe as well as the return pipe on the basis of the measurement results collected in said time intervals, and that a value of the volume or mass flow difference for the period is calculated on the basis of the average volume or mass flow values.

4. A method according to claims 1-3, **characterized in that** the calculated volume or mass flow difference is compared with a selected threshold value (A), and if the absolute value of the volume or mass flow difference exceeds the selected threshold value, the excess is recorded as an operational disturbance.

5. A method according to claims 1-4, **characterized in that** the number of recorded operational disturbances from successive measurement periods is compared with the value of a selected error criterion (B), and if the number of operational disturbances exceeds the value of the selected error criterion, an alarm message is given, and the pipes are shut-off.

6. A method according to claims 1-5, **characterized in that** the error criterion (B), which consists of a selected fixed value and an adjustable value, is corrected dynamically by automatic adjustment of the adjustable value in accordance with the number of air indications summed up.

7. A method according to claims 1-6, **characterized in that** the fixed value of the error criterion is determined on the basis of a selected acceptable number of measurement periods with operational disturbances.

8. A method according to claims 6-7, **characterized in that** the threshold value (A) consists of a selected fixed value proportional to the capacity of the ultrasound flow meters and a dynamic value proportional to the average flow of the ultrasound flow meters.

9. A method according to claims 1-8, **characterized in that** newly arrived flow data overwrite the oldest flow data in a measurement and activity period, as long as no operational disturbance is recorded.

10. A method according to claims 1-9, **characterized in that** all previous flow data in a measurement and activity period are deleted, if an operational disturbance is recorded.

11. A method according to claims 1-10, **characterized in that** an error message is given, if the duration of a recorded continuous air indication exceeds a preselected period of time.

12. A method according to any one of claims 1-11, **characterized in that** flow data for the supply pipe (4) and/or the return pipe (7) are determined as volume flow by said ultrasound flow meters (3, 6).

13. A method according to any one of claims 1-12, wherein when the flow value is measured as mass flow the method further comprises:
- collection of temperature data for the flow in the supply pipe and in the return pipe by means of temperature sensors (11, 12) and
- calculation of mass flow on the basis of collected volume flow data and temperature data in an energy computing unit (8a).

14. A leakage control system (1) in pipe installations for performing the method according to claims 1-13, said leakage control system comprising one shut-off valve (2) with an associated electric actuator (9) and an ultrasound flow meter (3) arranged in the supply pipe (4) of the pipe installation, and one shut-off valve (5) with an associated actuator (9) and an ultrasound flow meter (6) arranged in the return pipe (7) of the pipe installation, said shut-off valves (2, 5), actuators (9) and ultrasound flow meters (3, 6) being connected with a control box (8), said control box being adapted to execute the method when running through a periodic course comprising a measurement and activity period followed by an inactive period, wherein the measurement and activity period comprises
- collection of flow data from the supply pipe (4) and the return pipe (7) with the associated ultrasound flow meters (3, 6),
- recording of the presence of air in the supply pipe (4) and the return pipe (7),
- processing of the collected flow data in a computing unit,
- recording of operational disturbances on the basis of the processed flow data, and
- decision on intervention on the basis of the number of recorded operational disturbances, if the number of operational disturbances exceeds a dynamic error criterion (B), said error criterion (B) being corrected currently in accordance with the number of air indications,
and wherein the control box (8) comprises
- a scheduler, which passes the leakage system through the periodic course comprising a measurement and activity period followed by an inactive period,
- a computing unit, which processes the collected measurement results and corrects a selected threshold value and a selected error criterion, as well as
- a control system, which, upon a comparison of the number of operational disturbances with the error criterion, is adapted to give an alarm message and/or shut-off the supply and return pipes if an excess is involved;
**characterized in that** the control system is configured to check for the presence of air in the supply pipe (4) and the return pipe (7) in each time interval in the entire measurement and activity period by comparing the flow values in each pipe with each other, and if a flow value is zero in one pipe, and a flow value greater than the cut-off value of the flow meter is measured in the other pipe, this is recorded as an indication of the presence of air.

15. A leakage control system according to claim 14, **characterized in that** the flow meters (3, 6) in the supply pipe (4) and/or the return pipe (7) are ultrasound-based flow meters.

16. A leakage control system according to claim 14 or 15, **characterized in that** the leakage control system (1) additionally comprises an energy computing unit (8a) as well as at least two temperature sensors (11, 12) arranged in the supply pipe (4) and the return pipe (7), respectively.

## Patentansprüche

1. Verfahren zum Erkennen von Leckagen in Rohrinstallationen mit einem Vorlauf- (4) und einem Rücklaufrohr (7) mittels eines Leckagekontrollsystems (1), das ein Absperrventil (2) mit einem zugehörigen Stellglied (9) und einem in dem Vorlaufrohr (4) der Rohrinstallation angeordneten Ultraschalldurchsatzmesser (3) und ein Absperrventil (5) mit einem zugehörigen Stellglied (9) und einem in dem Rücklaufrohr (7) der Rohrinstallation angeordneten Ultraschalldurchsatzmesser (6) umfasst, wobei die Absperrventile (2, 5), Stellglieder (9) und Ultraschalldurchsatzmesser (3, 6) mit einem Steuerkasten (8) verbunden sind, wobei der Steuerkasten dazu ausgelegt ist, das Verfahren auszuführen, wenn er einen periodischen Ablauf durchläuft, der einen Mess- und Aktivitätszeitraum umfasst, auf den ein inaktiver Zeitraum folgt, wobei der Mess- und Aktivitätszeitraum Folgendes umfasst:
- Sammlung von Volumen- oder Massendurchsatzdaten von dem Vorlaufrohr (4) und dem Rücklaufrohr (7) mit den zugehörigen Ultraschalldurchsatzmessern (3, 6),
- Aufzeichnen des Vorhandenseins von Luft in dem Vorlaufrohr (4) und dem Rücklaufrohr (7),
- Verarbeiten der gesammelten Volumen- oder Massendurchsatzdaten in einer Recheneinheit,
- Aufzeichnen von Betriebsstörungen auf Grundlage der verarbeiteten Volumen- und Massendurchsatzdaten, und
- Entscheidung über einen Eingriff auf Grundlage der Anzahl von aufgezeichneten Betriebsstörungen, wenn die Anzahl von Betriebsstörungen ein dynamisches Fehlerkriterium (B) überschreitet, wobei das Fehlerkriterium (B) laufend gemäß dem Vorhandensein von Luft, wenn überhaupt, in der Installation korrigiert wird;
**dadurch gekennzeichnet, dass** der Mess- und Aktivitätszeitraum in eine Anzahl von kurzen Zeitintervallen unterteilt ist, und wobei das Vorhandensein von Luft in dem Vorlaufrohr (4) und dem Rücklaufrohr (7) in jedem Zeitintervall in dem gesamten Mess- und Aktivitätszeitraum durch Vergleichen der Volumen- oder Massendurchsatzwerte in jedem Rohr miteinander geprüft wird und, wenn ein Volumen- oder Massendurchsatzwert in einem Rohr gleich null ist und ein größerer Volumen- oder Massendurchsatzwert als der Grenzwert des Ultraschalldurchsatzmessers in dem anderen Rohr gemessen wird, dies als eine Angabe des Vorhandenseins von Luft aufgezeichnet wird.

2. Verfahren nach Anspruch 1, **dadurch gekennzeichnet, dass** die Anzahl von Luftangaben in jedem Mess- und Aktivitätszeitraum nacheinander summiert wird.

3. Verfahren nach den Ansprüchen 1-2, **dadurch gekennzeichnet, dass** ein mittlerer Volumen- oder Massendurchsatzwert für den Mess- und Aktivitätszeitraum für das Vorlaufrohr sowie das Rücklaufrohr auf Grundlage der in den Zeitintervallen gesammelten Messergebnisse berechnet wird und dass ein Wert der Volumen- oder Massendurchsatzdifferenz für den Zeitraum auf Grundlage der mittleren Volumen- oder Massendurchsatzwerte berechnet wird.

4. Verfahren nach den Ansprüchen 1-3, **dadurch gekennzeichnet, dass** die berechnete Volumen- oder Massendurchsatzdifferenz mit einem ausgewählten Schwellenwert (A) verglichen wird und, wenn der Absolutwert der Volumen- oder Massendurchsatzdifferenz den ausgewählten Schwellenwert überschreitet, die Überschreitung als eine Betriebsstörung aufgezeichnet wird.

5. Verfahren nach den Ansprüchen 1-4, **dadurch gekennzeichnet, dass** die Anzahl von aufgezeichneten Betriebsstörungen aus aufeinanderfolgenden Messzeiträumen mit dem Wert eines ausgewählten Fehlerkriteriums (B) verglichen wird und, wenn die Anzahl von Betriebsstörungen den Wert des ausgewählten Fehlerkriteriums überschreitet, eine Alarmmeldung ausgegeben wird und die Rohre abgesperrt werden.

6. Verfahren nach den Ansprüchen 1-5, **dadurch gekennzeichnet, dass** das Fehlerkriterium (B), das aus einem ausgewählten festen Wert und einem einstellbaren Wert besteht, dynamisch durch automatische Einstellung des einstellbaren Werts gemäß der Anzahl von summierten Luftangaben korrigiert wird.

7. Verfahren nach den Ansprüchen 1-6, **dadurch gekennzeichnet, dass** der feste Wert des Fehlerkriteriums auf Grundlage einer ausgewählten annehmbaren Anzahl von Messzeiträumen mit Betriebsstörungen bestimmt wird.

8. Verfahren nach den Ansprüchen 6-7, **dadurch gekennzeichnet, dass** der Schwellenwert (A) aus einem ausgewählten festen Wert, der proportional zur Kapazität der Ultraschalldurchsatzmesser ist, und einem dynamischen Wert, der proportional zum mittleren Durchsatz der Ultraschalldurchsatzmesser ist, besteht.

9. Verfahren nach den Ansprüchen 1-8, **dadurch gekennzeichnet, dass** neu eingehende Durchsatzdaten die ältesten Durchsatzdaten in einem Mess- und Aktivitätszeitraum überschreiben, solange keine Betriebsstörung aufgezeichnet wird.

10. Verfahren nach den Ansprüchen 1-9, **dadurch gekennzeichnet, dass** sämtliche vorhergehenden Durchsatzdaten in einem Mess- und Aktivitätszeitraum gelöscht werden, wenn eine Betriebsstörung aufgezeichnet wird.

11. Verfahren nach den Ansprüchen 1-10, **dadurch gekennzeichnet, dass** eine Fehlermeldung ausgegeben wird, wenn die Dauer einer aufgezeichneten durchgängigen Luftangabe einen vorausgewählten Zeitraum überschreitet.

12. Verfahren nach einem der Ansprüche 1-11, **dadurch gekennzeichnet, dass** Durchsatzdaten für das Vorlaufrohr (4) und/oder das Rücklaufrohr (7) von den Ultraschalldurchsatzmessern (3, 6) als Volumendurchsatz bestimmt werden.

13. Verfahren nach einem der Ansprüche 1-12, wobei, wenn der Durchsatzwert als Massendurchsatz gemessen wird, das Verfahren ferner Folgendes umfasst:
- Sammlung von Temperaturdaten für den Durchsatz in dem Zulaufrohr und in dem Rücklaufrohr mittels Temperatursensoren (11, 12) und
- Berechnung des Massendurchsatzes auf Grundlage von gesammelten Volumendurchsatzdaten und Temperaturdaten in einer Energierecheneinheit (8a).

14. Leckagekontrollsystem (1) in Rohrinstallationen zum Durchführen des Verfahrens nach den Ansprüchen 1-13, wobei das Leckagekontrollsystem ein Absperrventil (2) mit einem zugehörigen Stellglied (9) und einem in dem Vorlaufrohr (4) der Rohrinstallation angeordneten Ultraschalldurchsatzmesser (3) und ein Absperrventil (5) mit einem zugehörigen Stellglied (9) und einem in dem Rücklaufrohr (7) der Rohrinstallation angeordneten Ultraschalldurchsatzmesser (6) umfasst, wobei die Absperrventile (2, 5), Stellglieder (9) und Ultraschalldurchsatzmesser (3, 6) mit einem Steuerkasten (8) verbunden sind, wobei der Steuerkasten dazu ausgelegt ist, das Verfahren auszuführen, wenn er einen periodischen Ablauf durchläuft, der einen Mess- und Aktivitätszeitraum umfasst, auf den ein inaktiver Zeitraum folgt, wobei der Mess- und Aktivitätszeitraum Folgendes umfasst:
- Sammlung von Durchsatzdaten von dem Vorlaufrohr (4) und dem Rücklaufrohr (7) mit den zugehörigen Ultraschalldurchsatzmessern (3, 6),
- Aufzeichnen des Vorhandenseins von Luft in dem Vorlaufrohr (4) und dem Rücklaufrohr (7),
- Verarbeiten der gesammelten Durchsatzdaten in einer Recheneinheit,
- Aufzeichnen von Betriebsstörungen auf Grundlage der verarbeiteten Durchsatzdaten, und
- Entscheidung über einen Eingriff auf Grundlage der Anzahl von aufgezeichneten Betriebsstörungen, wenn die Anzahl von Betriebsstörungen ein dynamisches Fehlerkriterium (B) überschreitet, wobei das Fehlerkriterium (B) laufend gemäß der Anzahl von Luftangaben korrigiert wird,
und wobei der Steuerkasten (8) Folgendes umfasst:
- einen Planer, der das Leckagesystem durch den periodischen Ablauf führt, der einen Mess- und Aktivitätszeitraum umfasst, auf den ein inaktiver Zeitraum folgt,
- eine Recheneinheit, welche die gesammelten Messergebnisse verarbeitet und einen ausgewählten Schwellenwert und ein ausgewähltes Fehlerkriterium korrigiert, sowie
- ein Steuersystem, das bei einem Vergleich der Anzahl von Betriebsstörungen mit dem Fehlerkriterium dazu ausgelegt ist, eine Alarmmeldung abzugeben und/oder das Vorlauf- und Rücklaufrohr abzusperren, wenn eine Überschreitung vorliegt;
**dadurch gekennzeichnet, dass** das Steuersystem dazu konfiguriert ist, auf das Vorhandensein von Luft in dem Vorlaufrohr (4) und dem Rücklaufrohr (7) in jedem Zeitintervall in dem gesamten Mess- und Aktivitätszeitraum durch Vergleichen der Durchsatzwerte in jedem Rohr miteinander zu prüfen und, wenn ein Durchsatzwert in einem Rohr gleich null ist und ein größerer Durchsatzwert als der Grenzwert des Durchsatzmessers in dem anderen Rohr gemessen wird, dies als eine Angabe des Vorhandenseins von Luft aufgezeichnet wird.

15. Leckagekontrollsystem nach Anspruch 14, **dadurch gekennzeichnet, dass** die Durchsatzmesser (3, 6) in dem Vorlaufrohr (4) und/oder dem Rücklaufrohr (7) auf Ultraschall basierende Durchsatzmesser sind.

16. Leckagekontrollsystem nach Anspruch 14 oder 15, **dadurch gekennzeichnet, dass** das Leckagekontrollsystem (1) zusätzlich eine Energierecheneinheit (8a) sowie mindestens zwei Temperatursensoren (11, 12) umfasst, die in dem Vorlaufrohr (4) bzw. dem Rücklaufohr (7) angeordnet sind.

## Revendications

1. Procédé pour détecter les fuites dans les installations de canalisations comprenant une canalisation d'alimentation (4) et une canalisation de retour (7) au moyen d'un système de contrôle des fuites (1), qui comprend une vanne d'arrêt (2) équipée d'un actionneur (9) installé et un débitmètre à ultrasons (3) disposés dans la canalisation d'alimentation (4) de l'installation de canalisations, et une vanne d'arrêt (5) équipée d'un actionneur (9) installé et un débitmètre à ultrasons (6) disposés dans la canalisation de retour (7) de l'installation de canalisations, lesdits vannes d'arrêt (2, 5), actionneurs (9) et débitmètres à ultrasons (3, 6) étant connectés à une boîte de commande (8), ladite boîte de commande étant conçue pour mettre en œuvre le procédé lorsqu'il se déroule selon un mode d'opération périodique qui comprend une période de mesure et d'activité suivie d'une période d'inactivité, dans lequel la période de mesure et d'activité comprend :
- la collecte de données de débit massique ou volumétrique depuis la canalisation d'alimentation (4) et la canalisation de retour (7) à l'aide des débitmètres à ultrasons installés (3, 6),
- l'enregistrement de la présence d'air dans la canalisation d'alimentation (4) et la canalisation de retour (7),
- le traitement des données de débit massique ou volumétrique collectées dans une unité de calcul,
- l'enregistrement des perturbations opérationnelles sur la base des données de débit massique ou volumétrique traitées, et
- la décision d'intervention sur la base du nombre de perturbations opérationnelles enregistrées, si le nombre de perturbations opérationnelles dépasse un critère d'erreur dynamique (B), ledit critère d'erreur (B) étant corrigé de manière continue en fonction de la présence d'air, le cas échéant, dans l'installation ;
**caractérisé en ce que** la période de mesure et d'activité est divisée en plusieurs intervalles de temps courts, et dans lequel la présence d'air dans la canalisation d'alimentation (4) et la canalisation de retour (7) est vérifiée dans chaque intervalle de temps pendant toute la période de mesure et d'activité en comparant les valeurs de débit massique ou volumétrique dans chaque canalisation par rapport à l'autre, et si une valeur de débit massique ou volumétrique est nulle dans une canalisation, et une valeur de débit massique ou volumétrique supérieure à la valeur seuil du débitmètre à ultrasons est mesurée dans l'autre canalisation, ceci est enregistré en tant qu'indication de la présence d'air.

2. Procédé selon la revendication 1, **caractérisé en ce que** le nombre d'indications d'air lors de chaque période de mesure et d'activité est additionné successivement.

3. Procédé selon les revendications 1 à 2, **caractérisé en ce qu'**une valeur de débit massique ou volumétrique moyenne pour la période de mesure et d'activité est calculée pour la canalisation d'alimentation et pour la canalisation de retour sur la base des résultats de mesure collectés au cours desdits intervalles de temps, et **en ce qu'**une valeur de la différence de débit massique ou volumétrique pour la période est calculée sur la base des valeurs de débit massique ou volumétrique moyennes.

4. Procédé selon les revendications 1 à 3, **caractérisé en ce que** la différence de débit massique ou volumétrique calculée est comparée à une valeur seuil sélectionnée (A), et si la valeur absolue de la différence de débit massique ou volumétrique dépasse la valeur seuil sélectionnée, le dépassement est enregistré en tant que perturbation opérationnelle.

5. Procédé selon les revendications 1 à 4, **caractérisé en ce que** le nombre de perturbations opérationnelles enregistrées au cours des périodes de mesure successives est comparé à la valeur d'un critère d'erreur sélectionné (B), et si le nombre de perturbations opérationnelles dépasse la valeur du critère d'erreur sélectionné, un message d'alerte est émis, et les canalisations sont fermées.

6. Procédé selon les revendications 1 à 5, **caractérisé en ce que** le critère d'erreur (B), qui est composé d'une valeur fixe sélectionnée et d'une valeur ajustable, est corrigé de manière dynamique par ajustement automatique de la valeur ajustable en fonction du nombre total d'indications d'air.

7. Procédé selon les revendications 1 à 6, **caractérisé en ce que** la valeur fixe du critère d'erreur est déterminée sur la base d'un nombre acceptable sélectionné de périodes de mesure comprenant des perturbations opérationnelles.

8. Procédé selon les revendications 6 à 7, **caractérisé en ce que** la valeur seuil (A) est composée d'une valeur fixe sélectionnée proportionnelle à la capacité des débitmètres à ultrasons et d'une valeur dynamique proportionnelle au débit moyen des débitmètres à ultrasons.

9. Procédé selon les revendications 1 à 8, **caractérisé en ce que** les données de débit dernièrement arrivées remplacent les anciennes données de débit dans une période de mesure et d'activité, tant qu'aucune perturbation opérationnelle n'est enregistrée.

10. Procédé selon les revendications 1 à 9, **caractérisé en ce que** toutes les données de débit précédentes dans une période de mesure et d'activité sont effacées, si une perturbation opérationnelle est enregistrée.

11. Procédé selon les revendications 1 à 10, **caractérisé en ce qu'**un message d'erreur est émis, si la durée d'une indication d'air continue enregistrée dépasse une période de temps présélectionnée.

12. Procédé selon l'une quelconque des revendications 1 à 11, **caractérisé en ce que** les données de débit pour la canalisation d'alimentation (4) et/ou la canalisation de retour (7) sont déterminées en tant que débit volumétrique par lesdits débitmètres à ultrasons (3, 6).

13. Procédé selon l'une quelconque des revendications 1 à 12, dans lequel lorsque la valeur de débit est mesurée en tant que débit massique le procédé comprend en outre :
- la collecte de données de température pour le débit dans la canalisation d'alimentation et dans la canalisation de retour au moyen de capteurs de température (11, 12) et
- le calcul du débit massique sur la base des données de débit volumétrique collectées et des données de température collectées dans une unité de calcul d'énergie (8a).

14. Système de contrôle des fuites (1) dans les installations de canalisations destiné à mettre en œuvre le procédé selon les revendications 1 à 13, ledit système de contrôle des fuites comprenant une vanne d'arrêt (2) équipée d'un actionneur électrique (9) et un débitmètre à ultrasons (3) disposés dans la canalisation d'alimentation (4) de l'installation de canalisations, et une vanne d'arrêt (5) équipée d'un actionneur (9) et un débitmètre à ultrasons (6) disposés dans la canalisation de retour (7) de l'installation de canalisations, lesdites vannes d'arrêt (2, 5), actionneurs (9) et débitmètres à ultrasons (3, 6) étant connectés à une boîte de commande (8), ladite boîte de commande étant conçue pour mettre en œuvre le procédé lorsqu'il se déroule selon un mode d'opération périodique comprenant une période de mesure et d'activité suivie d'une période d'inactivité, dans lequel ladite période de mesure et d'activité comprend
- la collecte de données de débit depuis la canalisation d'alimentation (4) et la canalisation de retour (7) à l'aide des débitmètres à ultrasons installés (3, 6),
- l'enregistrement de la présence d'air dans la canalisation d'alimentation (4) et la canalisation de retour (7),
- le traitement des données de débit collectées dans une unité de calcul,
- l'enregistrement des perturbations opérationnelles sur la base des données de débit traitées, et
- la décision d'intervention sur la base du nombre de perturbations opérationnelles enregistrées, si le nombre de perturbations opérationnelles dépasse un critère d'erreur dynamique (B), ledit critère d'erreur (B) étant corrigé de manière continue en fonction du nombre d'indications d'air,
et dans lequel la boîte de commande (8) comprend
- un programmateur, qui met en œuvre le système de détection de fuites selon le mode d'opération périodique comprenant une période de mesure et d'activité suivie d'une période d'inactivité,
- une unité de calcul, qui traite les résultats de mesure collectés et corrige une valeur seuil sélectionnée et un critère d'erreur sélectionné, ainsi qu'un
- système de contrôle, qui, après comparaison du nombre de perturbations opérationnelles au critère d'erreur, est conçu pour émettre un message d'alerte et/ou fermer les canalisations d'alimentation et de retour si un dépassement est impliqué ;
**caractérisé en ce que** le système de contrôle est configuré pour vérifier la présence d'air dans la canalisation d'alimentation (4) et la canalisation de retour (7) dans chaque intervalle de temps pendant toute la période de mesure et d'activité en comparant les valeurs de débit dans chaque canalisation par rapport à l'autre, et si une valeur de débit est nulle dans une canalisation, et une valeur de débit supérieure à la valeur seuil du débitmètre est mesurée dans l'autre canalisation, ceci est enregistré en tant qu'indication de la présence d'air.

15. Système de contrôle des fuites selon la revendication 14, **caractérisé en ce que** les débitmètres (3, 6) dans la canalisation d'alimentation (4) et/ou la canalisation de retour (7) sont des débitmètres à ultrasons.

16. Système de contrôle des fuites selon la revendication 14 ou 15, **caractérisé en ce que** le système de contrôle des fuites (1) comprend en outre une unité de calcul d'énergie (8a) ainsi qu'au moins deux capteurs de température (11, 12) disposés dans la canalisation d'alimentation (4) et la canalisation de retour (7), respectivement.
